# EUROPEAN PATENT SPECIFICATION

(11) **EP 1 474 967 B1**
(45) Date of publication and mention of the grant of the patent: **04.03.2009**
(21) Application number: 04101780.7
(22) Date of filing: 28.04.2004
(51) Int. Cl.: A01G 9/14

(54) **Greenhouse**
Gewächshaus
Serre

(30) Priority: 09.05.2003 NL 1023377
(43) Date of publication of application: 10.11.2004
(73) Proprietor: Excellent Glastuinbouwsystemen B.V., 2291 EE Wateringen (NL)
(72) Inventor: Van der Ven, Wilhelmus, Jacobus, 2291 EE, Wateringen (NL); Arensman, Ronnie, 2291 EE, Wateringen (NL)
(74) Representative: Hooiveld, Arjen Jan Winfried

(56) References cited:
- BE-A- 1 007 831
- NL-A- 7 017 622
- NL-A- 8 200 282
- NL-A- 8 902 603

## Description

The invention relates to a (Dutch-type) greenhouse comprising at least one gutter section and a roof extending from said gutter section, said roof comprising a ridge section as well as spaced-apart glazing bars which are connected to an edge of the gutter section near one end and to the ridge section near the other end, wherein panes are provided between adjacent glazing bars, which panes are supported in rabbets formed in said glazing bars. The invention also provides a method for constructing such a greenhouse.

It is noted that in practice the term "greenhouse" is generally understood to mean a hothouse suitable for cultivating vegetables, fruit or flowers.

Such a greenhouse is generally known and is described, for example, in Dutch patent publication No. 89.02603 (P.L.J. Bom Beheer B.V.). The greenhouse discussed therein is built up of columns, gutters of tubular section supported by said columns, as well as an inclined roof extending between two gutters, said roof comprising a ridge section, glazing bars and panes. Said gutters and said glazing bars form structural elements that are to bear the weight of the roof and take up wind and snow loads.

A general drawback of the greenhouse of the type as referred to in the introduction, including the greenhouse that is known from the aforesaid Dutch patent publication, is the following. It has become apparent in practice that perilous situations may occur as a result of panes breaking, both during the setting of the panes (the so-called "glassing") and during use of such a greenhouse: falling, sharp and heavy pane fragments may cause serious or even deadly injury to personnel working in the greenhouse. In order to reduce these risks to a certain extent, panes of hardened class are generally used, but the risk of panes breaking, with all its adverse consequences, is not excluded in such a case. So far an adequate solution to the problem of panes breaking has not been found.

Dutch patent publication no. 7 017 622 (Lips Aluminium N.V.) describes a greenhouse according to the preamble of claim 1. The pressure-distributing element described therein is a sealing element. A drawback thereof is that panes could break or fall out as a result of temperature changes of the steel structure of this known greenhouse.

The object of the invention is to overcome the above drawback of the prior art, in particular to provide a greenhouse in which the risk of panes breaking (during glassing and during use of the greenhouse) has been reduced to acceptable proportions. In order to accomplish that object, a greenhouse of the kind referred to in the preamble of claim 1 is according to the invention characterized in that the pressure-distributing element is of at least substantially W-shaped cross-section. The pressure-distributing element functions as a supporting surface for the pane, whose purpose it is to locally distribute the weight of the pane in such a manner that no point loads will occur in the pane at that location, not only upon setting of the panes but also upon manual or mechanical cleaning of the panes after some time.

Extensive tests have shown that the risk of panes breaking has thus been reduced to practically zero, the result being in particular that it has become readily possible to insure the greenhouse in question at low cost. The pressure-distributing element also prevents the panes from being "sucked up" when high wind forces occur. This W-shaped cross-section makes it possible to compensate for the steel structure of the present greenhouse being pulled out of alignment as a result of temperature changes (blazing sun during the daytime, cold at night) so as to prevent panes breaking or falling out. The W-shape guarantees that this compensation takes place in a "harmonica-like" manner through compression thereof. In this way a "rattle-free" support of the panes in the rabbets is ensured.

It is noted that the invention is not limited to panes of hardened class but that it also extends to panes of other (transparent) materials, such as common glass, plastic and the like. In the light of the risk of panes breaking it is preferable, however, to use panes of hardened class.

In one preferred embodiment of the greenhouse according to the invention, the pressure-distributing element at least substantially abuts against an inner side of the glazing bar rabbet. More in particular, the glazing bar rabbet is of at least substantially U-shaped cross-section, whilst the pressure-distributing element at least substantially extends exclusively from one leg of the U-shape to the other. In other words, the pressure-distributing element forms an inner liner of the rabbet, as it were, without said liner extending outside the rabbet.

In one preferred embodiment of a greenhouse according to the invention, the pressure-distributing element is at least substantially made of a material having thermally insulating properties. The thermally insulating, pressure-distributing element prevents thermal bridges being formed at the rabbets. Preferably, the pressure-distributing element, too, is at least substantially made of a material having water sealing properties. The pressure-distributing element also functions as a seal in that case, in order to prevent (rain) water and dirt finding their way into the greenhouse from outside past the panes.

In one preferred embodiment of a greenhouse according to the invention, the pressure-distributing element is at least substantially made of a material having sound-insulating properties. This leads to a low-noise roof structure.

In one preferred embodiment of a greenhouse according to the invention, the pressure-distributing element is at least substantially made up of a rubber section, which is preferably shrink-proof.

The invention also relates to a pressure-distributing element apparently suitable for use in a greenhouse according to the invention.

As already noted before, the invention also relates to a method for constructing a greenhouse according to the invention, wherein a roof extending from at least one gutter section is built up of a ridge section and spaced-apart glazing bars, which spaced-apart glazing bars are connected to an edge of the gutter section near one end and to the ridge section near the other end, wherein panes are provided between adjacent glazing bars, which the panes are supported in rabbets formed in said glazing bars, characterized in that a pressure-distributing element with an at least substantially W-shaped cross-section is fitted in a glazing bar rabbet.

The invention will now be explained in more detail with reference to figures illustrated in a drawing, in which:
- Fig. 1 is a schematic, perspective view of a part of a roof of a greenhouse according to the invention;
- Fig. 2 is a sectional view along the line a II-II in Fig. 1;
- Fig. 3 is a schematic, perspective view of a part III of Fig. 2; and
- Fig. 4 is a cross-sectional view of a pressure-distributing element as used in the greenhouse of Fig. 1.

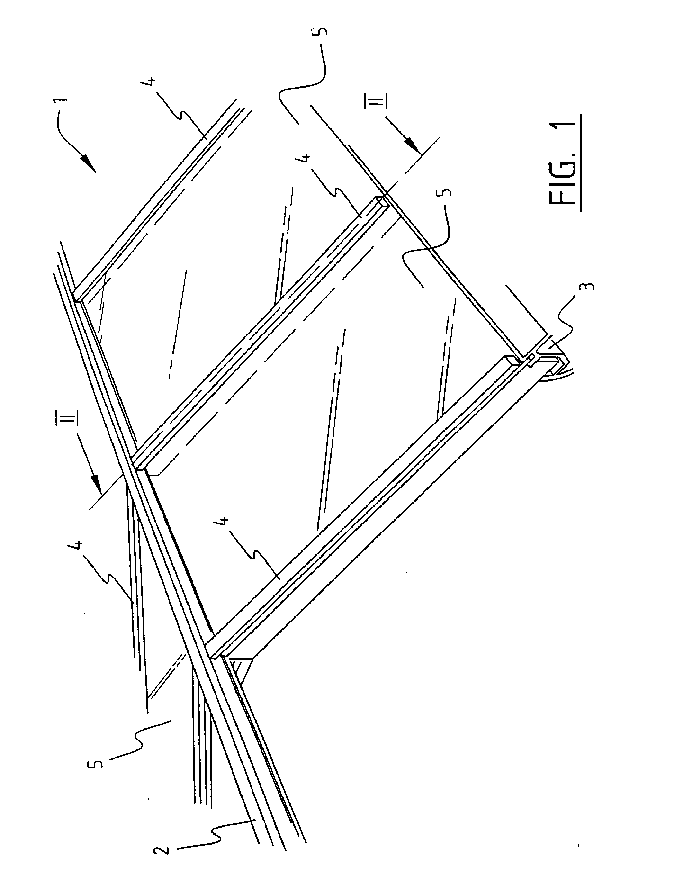

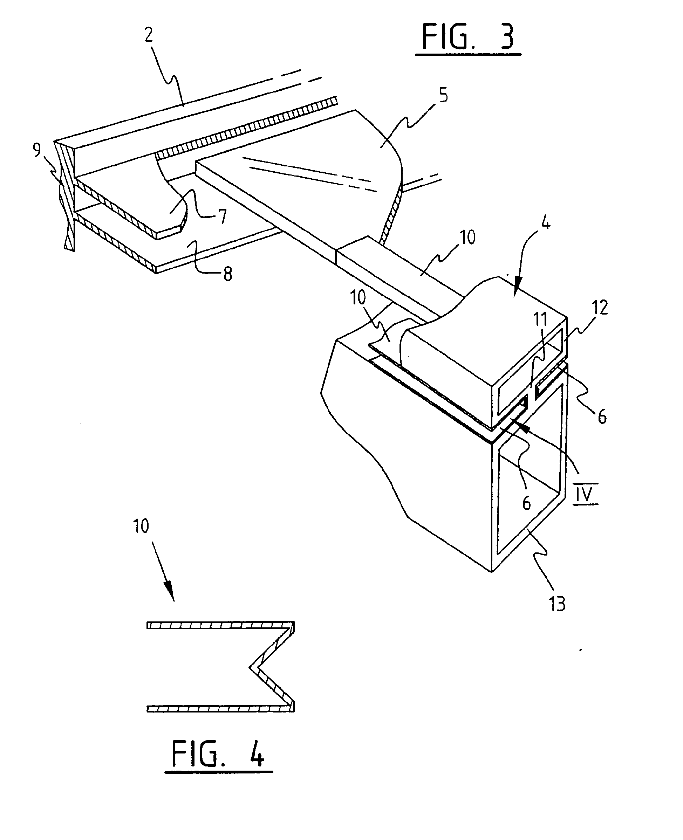

Fig. 1 shows a greenhouse whose inclined roof 1 is built up of a ridge section 2 extending in the longitudinal direction of the greenhouse and glazing bars 4 mounted on either side of the ridge section 2, which glazing bars are supported on gutter sections 3. The gutter sections 3 are of tubular cross-section, in turn being supported on columns (not shown). Panes 5 of hardened glass are fitted between adjacent glazing bars 4, and that in such a manner that said panes rest in lateral rabbets 6 of the glazing bars 4 and between upper flanges 7 and lower flanges 8 of the ridge section 2 (see Fig. 3). As Fig. 3 shows, the upper and lower flanges 7,8 are connected to a web 9 of the ridge section 2, sloping downwards therefrom.

Referring to Fig. 3, the rabbets 6 of the glazing bars 4 are lined with a rubber section 10 of W-shaped cross-section, so that it is possible to compensate for the steel structure being pulled out of alignment as a result of temperature changes through local compression of the W-shape. The rubber section 10 primarily functions as a pressure-distributing supporting surface for the panes 5, but in addition to that it functions to seal the panes 5 against water and dirt along a web 11, an upper sleeve 12 and a lower sleeve 13 of the glazing bars 4. The rubber section 10 furthermore functions as a thermal insulation device that is to prevent the occurrence of thermal bridges across said parts 11,12,13 of the glazing bars 4. It will be apparent that the rubber section 10 ensures a "rattle-free" setting of the panes 5 in the lateral rabbets 6. The rubber section 10 is white on the upper side (the sun side) for reflection reasons.

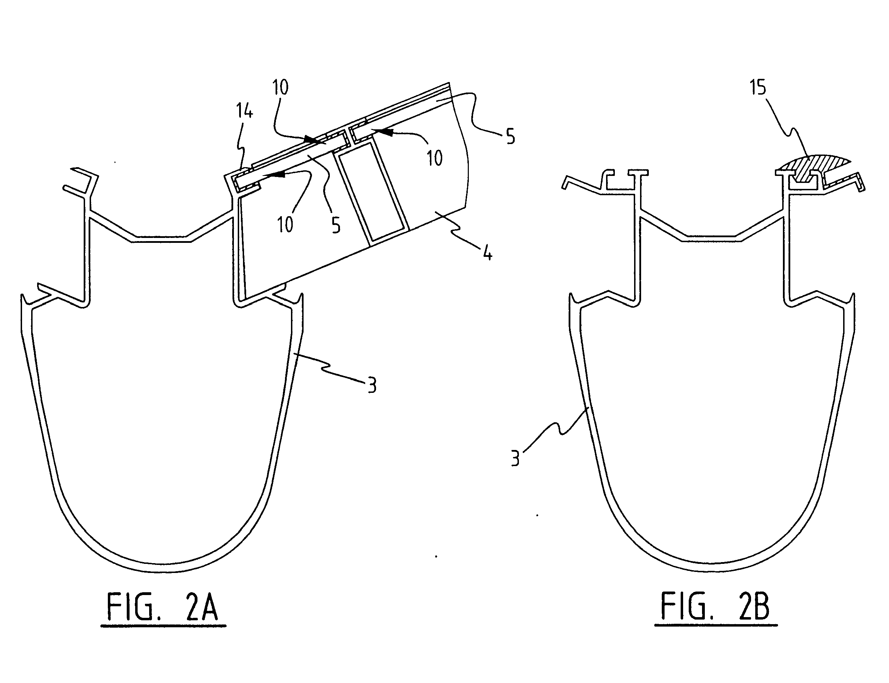

In Fig. 2, a rabbet of an edge 14 of the gutter sections 3 in which the panes 5 are supported is likewise fitted with a rubber section 10 (Fig. 2a), whilst it is also possible to mount an alternatively shaped rubber section 15 directly on the edge 14 (Fig. 2b).

Fig. 4 shows a W-shaped cross-section of a rubber section 10.

It is noted that the invention is not limited to the embodiment that is shown herein, but that it also extends to other variants that fall within the scope of the appended claims.

## Claims

1. A greenhouse comprising at least one gutter section (3) and a roof (1) extending from said gutter section(3), said roof comprising a ridge section (2) as well as spaced-apart glazing bars (4) which are connected to an edge of the gutter section (3) near one end and to the ridge section (2) near the other end, wherein panes (5) are provided between adjacent glazing bars (4), which panes (5) are supported in rabbets (6) formed in said glazing bars (5), and wherein a pressure-distributing element (10) is mounted in a glazing bar rabbet (6), **characterized in that** the pressure-distributing element (10) is of at least substantially W-shaped cross-section.

2. A greenhouse according to claim 1, wherein the pressure-distributing element (10) at least substantially abuts against an inner side of the glazing bar rabbet (6).

3. A greenhouse according to claim 2, wherein the glazing bar rabbet (6) is of at least substantially U-shaped cross-section, and wherein the pressure-distributing element (10) at least substantially extends exclusively from one leg of the U-shape to the other.

4. A greenhouse according to claim 1, 2 or 3, wherein the pressure-distributing element (10) is at least substantially made of a material having thermally insulating properties.

5. A greenhouse according to any one of the preceding claims 1 - 4, wherein the pressure-distributing element (10) is at least substantially made of a material having water sealing properties.

6. A greenhouse according to any one of the preceding claims 1 - 5, wherein the pressure-distributing element (10) is at least substantially made of a material having sound-insulating properties.

7. A greenhouse according to any one of the preceding claims 1 - 6, wherein the pressure-distributing element (10) is at least substantially made up of a rubber section.

8. A pressure-distributing element (10) apparently suitable for use in a greenhouse according to any one of the preceding claims 1 - 7.

9. A method for constructing a greenhouse according to any one of the preceding claims 1 - 7, wherein a roof (1) extending from at least one gutter section (3) is built up of a ridge section (2) and spaced-apart glazing bars (4), which spaced-apart glazing bars (4) are connected to an edge of the gutter section (3) near one end and to the ridge section (2) near the other end, wherein panes (5) are provided between adjacent glazing bars (4), which the panes (5) are supported in rabbets (6) formed in said glazing bars (4), **characterized in that** a pressure-distributing element (10) with an at least substantially W-shaped cross-section is fitted in a glazing bar rabbet (6).

## Patentansprüche

1. Gewächshaus, das wenigstens einen Regenrinnenabschnitt (3) und ein Dach (1), das sich vom Regenrinnenabschnitt (3) weg erstreckt, umfasst, wobei das Dach einen Firstabschnitt (2) sowie beabstandete Verglasungsstangen (4) umfasst, die mit einer Kante des Regenrinnenabschnittes (3) nahe einem Ende und mit dem Firstabschnitt (2) nahe dem anderen Ende verbunden sind, wobei Scheiben (5) zwischen benachbarten Verglasungsstangen (4) vorgesehen sind, wobei diese Scheiben (5) in Falzen (6) gehalten sind, die in den Verglasungsstangen (5) ausgebildet sind, und wobei ein Druckverteilungselement (10) in einem Verglasungsstangenfalz (6) angebracht ist, **dadurch gekennzeichnet, dass** das Druckverteilungselement (10) einen im wesentlichen W-förmigen Querschnitt aufweist.

2. Gewächshaus nach Anspruch 1, wobei das Druckverteilungselement (10) wenigstens im wesentlichen gegen eine Innenseite des Verglasungsstangenfalzes (6) anliegt.

3. Gewächshaus nach Anspruch 2, wobei der Verglasungsstangenfalz (6) einen wenigstens im wesentlichen U-förmigen Querschnitt aufweist und wobei das Druckverteilungselement (10) sich wenigstens im wesentlichen ausschließlich von einem Schenkel der U-Form zum anderen erstreckt.

4. Gewächshaus nach Anspruch 1, 2 oder 3, wobei das Druckverteilungselement (10) wenigstens im wesentlich aus einem Material mit wärmeisolierenden Eigenschaften hergestellt ist.

5. Gewächshaus nach einem der vorangehenden Ansprüche 1-4, wobei das Druckverteilungselement (10) wenigstens im wesentlichen aus einem Material mit gegen Wasser abdichtenden Eigenschaften hergestellt ist.

6. Gewächshaus nach einem der vorangehenden Ansprüche 1-5, wobei das Druckverteilungselement (10) wenigstens im wesentlichen aus einem Material mit schallisolierenden Eigenschaften hergestellt ist.

7. Gewächshaus nach einem der vorangehenden Ansprüche 1-6, wobei das Druckverteilungselement (10) wenigstens im wesentlich aus einem Gummiabschnitt besteht.

8. Druckverteilungselement (10), das offensichtlich geeignet ist zur Verwendung in einem Gewächshaus nach einem der vorangehenden Ansprüche 1-7.

9. Verfahren zur Konstruktion eines Gewächshauses nach einem der vorangehenden Ansprüche 1-7, wobei ein Dach (1), das sich von wenigstens einem Regenrinnenabschnitt (3) weg erstreckt, aufgebaut ist auf einem Firstabschnitt (2) und beabstandeten Verglasungsstangen (4), wobei diese beabstandeten Verglasungsstangen (4) mit einer Kante des Regenrinnenabschnittes (3) nahe einem Ende und mit dem Firstabschnitt (2) nahe dem anderen Ende verbunden sind, wobei Scheiben (5) zwischen benachbarten Verglasungsstangen (4) vorgesehen sind, wobei diese Scheiben in Falzen (6) gehalten sind, die in den Verglasungsstangen (4) ausgebildet sind, **dadurch gekennzeichnet, dass** ein Druckverteilungselement (10) mit einem im wesentlichen W-förmigen Querschnitt in einen Verglasungsstangenfalz (6) eingesetzt wird.

## Revendications

1. Serre comprenant au moins une section (3) de gouttière et un toit (1) s'étendant de ladite section (3) de gouttière, ledit toit comprenant une longueur (2) de faîtage ainsi que des barres (4) de vitrage espacées qui sont reliées à un bord de la section (3) de gouttière à proximité d'une extrémité et vers la longueur (2) de faîtage à proximité de l'autre extrémité, dans laquelle des vitres (5) sont prévues entre des barres (4) de vitrage adjacentes, lesquelles vitres (5) sont supportées dans des feuillures (6) formées dans lesdites barres (5) de vitrage, et dans laquelle un élément (10) de répartition de pression est monté dans une feuillure (6) de barre de vitrage, **caractérisée en ce que** l'élément (10) de répartition de pression est d'une section transversale au moins sensiblement en forme de W.

2. Serre selon la revendication 1, dans laquelle l'élément (10) de répartition de pression vient au moins sensiblement en butée contre un côté intérieur de la feuillure (6) de barre de vitrage.

3. Serre selon la revendication 2, dans laquelle la feuillure (6) de barre de vitrage est d'une section transversale au moins sensiblement en forme de U, et dans laquelle l'élément (10) de répartition de pression s'étend au moins sensiblement exclusivement d'une branche du U à l'autre.

4. Serre selon les revendications 1, 2 ou 3, dans laquelle l'élément (10) de répartition de pression est au moins sensiblement fabriqué à partir d'un matériau possédant des propriétés thermo-isolantes.

5. Serre selon l'une quelconque des revendications 1 à 4 précédentes, dans laquelle l'élément (10) de répartition de pression est au moins sensiblement fabriqué à partir d'un matériau possédant des propriétés étanches à l'eau.

6. Serre selon l'une quelconque des revendications 1 à 5 précédentes, dans laquelle l'élément (10) de répartition de pression est au moins sensiblement fabriqué à partir d'un matériau possédant des propriétés d'insonorisation.

7. Serre selon l'une quelconque des revendications 1 à 6 précédentes, dans laquelle l'élément (10) de répartition de pression est au moins sensiblement constitué d'une section en caoutchouc.

8. Élément (10) de répartition de pression apparemment adapté pour être utilisé dans une serre selon l'une quelconque des revendications 1 à 7 précédentes.

9. Procédé destiné à construire une serre selon l'une quelconque des revendications 1 à 7 précédentes, dans lequel un toit (1) s'étendant d'au moins une section (3) de gouttière est constitué par une longueur (2) de faîtage et des barres (4) de vitrage espacées, lesquelles barres (4) de vitrage espacées sont reliées à un bord de la section (3) de gouttière à proximité d'une extrémité et à la longueur (2) de faîtage à proximité de l'autre extrémité, dans lequel des vitres (5) sont prévues entre des barres (4) de vitrage adjacentes, lesquelles vitres (5) sont supportées dans des feuillures (6) formées dans lesdites barres (4) de vitrage, **caractérisé en ce qu'**un élément (10) de répartition de pression possédant une section transversale au moins sensiblement en forme de W est monté dans une feuillure (6) de barre de vitrage.
